# EUROPEAN PATENT APPLICATION

(11) **EP 2 494 891 A1**
(43) Date of publication of application: **05.09.2012**
(21) Application number: 10826137.1
(22) Date of filing: 30.03.2010
(51) Int. Cl.: A47C 31/02, A47C 7/18, B60N 2/68

(54) **FASTENING SYSTEM FOR SEATS**

(30) Priority: 29.10.2009 ES 200930926
(71) Applicant: Centro Tecnológico De Grupo Copo, S.L.U., 36416 Puxeiros (MOS) Pontevedra (ES)
(72) Inventor: PUYOL CARBONELL, Jaime, E-36416 Puxeiros (MOS) Pontevedra (ES); TOMÁS TAPIA, José, E-36416 Puxeiros (MOS) Pontevedra (ES); FERNÁNDEZ BLANCO, Oscar, E-36416 Puxeiros (MOS) Pontevedra (ES)
(74) Representative: Carvajal y Urquijo, Isabel
(86) International application number: PCT/ES2010/070194
(87) International publication number: WO 2011/051516

(57) **Abstract**

The invention relates to a fastening system for seats. According to the invention, an insert (6) is incorporated into a foam cushion (1), said insert including at least one end free of cushion foam and connection stubs that are likewise free of said foam , such that a corresponding seat (11) is closed by means of a fastening profile section (5) that clamps the edges of a cover(2) and the edges of said foam-free end zone in order to close the cushion/cover assembly (3). In addition, the seat (11) is closed by connecting a base chair structure (4) with the aforementioned studs.

## Description

As expressed in the title of this specification, the present invention relates to a fastening system for seats the purpose of which essentially consists of providing a faster, simpler and more efficient fastening system than that which is currently used in automobile seats, without dismissing other applications of the system of the invention in seats of another kind. To obtain its efficiency, simplicity and speed, the system of the invention is based on incorporating an insert in the foam of a cushion component of the seat, that insert facilitating the connections to a cover and to a seat base.

### Background of the Invention

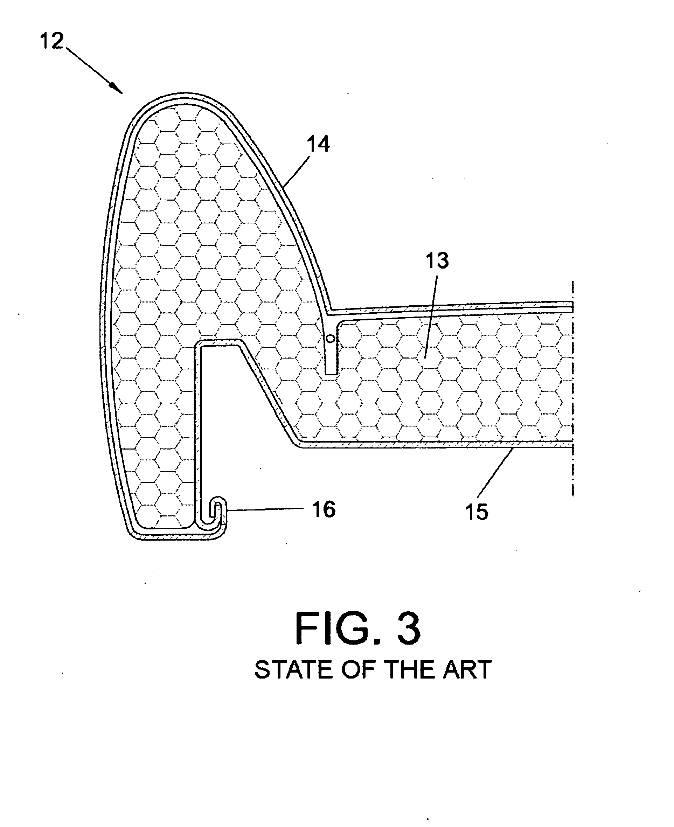

Currently, in the automotive industry, the seats of the vehicles tend to consist of an assembly made up of a cover and a foam cushion which are fastened on a usually metal base or chair by means of plastic sections, elastic elements, clamps and other auxiliary components which are sewn in the cover ends. The elements which are fastened to the mentioned metal chair are fastened in cavities, orifices or areas designed to firmly secure the assembly of the cover and the foam cushion in the mentioned chair. Furthermore there are cover-foam assemblies where the foam has a large base formed by a more rigid material and with comfort and safety features; the fastening to the seat or chair being carried out by means of the cover ends and with the intervention of sections, clips or other accessories. These seats of the state of the art, the general diagram of which is depicted in Figure 3 of this specification, have drawbacks relating to the fact that the fastenings which they provide are not as simple and efficient as desired, and above all they require an excessive assembly time which could be reduced using other configurations.

In this respect, a configuration which, like in the present invention, is based on the arrangement of an insert in the foam of the cushion to facilitate the connection with the cover and the connection with the metal chair of the seat at the same time is not known in the current state of the art.

### Description of the Invention

To achieve the objectives and prevent the drawbacks indicated in above sections, the invention consists of a fastening system for seats, especially applicable to automobile seats where the seat has a foam cushion which is partially surrounded with a cover made from a textile, leather or another material and which is placed on a usually metal base or chair, the assembly of the seat being closed at least in one of its areas with a locking section or clip encircling end edges of the chair and of the cover.

In a novel manner, in the fastening system according to the invention the corresponding foam cushion incorporates an insert which has at least one end area free of the foam of the cushion and connection stubs which are also free of said foam, such that the mentioned closing of the corresponding seat is carried out by means of a fastening element or section encircling the edges of the corresponding cover and the edges of the mentioned end area free of foam for closing the cushion-cover assembly, said closing being further carried out by means of connecting the corresponding chair with the mentioned stubs.

According to the preferred embodiment of the invention, the mentioned insert has a rectangular plate shape provided with hollow spaces and having in its main body a dihedral angle bend parallel to a larger side determining an L-section in the plate the smaller branch of which corresponds to the mentioned end area, while respective protruding rods orientated in the same direction as that smaller branch and establishing the mentioned connection stubs start out perpendicularly near the smaller sides of said plate.

On the other hand, in the mentioned preferred embodiment of the invention, the mentioned insert is made of a rigid material such as plastic, polymer or another material and is included at the time of foaming inside a shaping mould for the foam cushion, such that said insert forms an integral part of the mentioned cushion.

With the structure which has been described, the fastening system for seats of the invention has advantages relating to the fact that it determines very simple and efficient fastenings between seat components, further enabling very low assembly times with respect to those necessary in the state of the art since the stubs and the end area of the mentioned insert of the system of the invention facilitate faster and more efficient connections by means of snap coupling or similar connections.

For the purpose of aiding to better understand this specification and forming an integrating part thereof, a set of drawings is attached below in which the object of the invention has been depicted in an illustrative and non-limiting manner.

### Brief Description of the Drawings

Figure 1 depicts a partial, profile and cross-sectional view of an automobile seat in which a fastening system for seats carried out according to the present invention has been applied.
Figure 2 depicts a perspective view of one of the component parts of the system of the preceding Figure 1.
Figure 3 depicts a side, partial and cross-sectional view in the style of the preceding Figure 1 but in a conventional automobile seat using a fastening system of the state of the art.

### Description of an Embodiment of the Invention

A description of an example of the invention making reference to the numbering used in the drawings is given below.

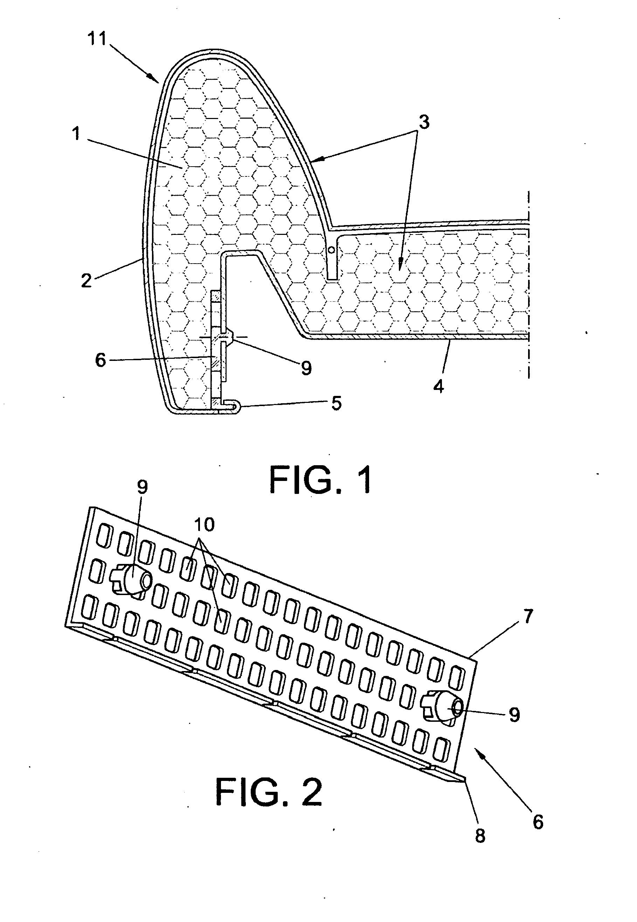

The fastening system for seats of this example of the invention is thus applied in an automobile seat 11 shown in Figure 1, while a conventional seat 12 with a system of the state of the art is shown in Figure 3.

In that Figure 3, it can be seen that the conventional seat 12 has a foam cushion 13 which is partially surrounded with a cover 14 made of a textile, leather or of another material, further being placed on a usually metal base or chair 15, the assembly of the seat being closed 12 at least in one of its areas by means of a locking section or clip 16 encircling end edges of the chair 15 and of the cover 14, additional elements such as clamps, elastic strips or other elements, which have not been depicted in Figure 3 for the sake of greater clarity thereof, further being required for fastening or fastenings of this conventional system.

According to the system of the present example, the seat 11 is configured by means of a foam cushion 1 in which an insert 6 is incorporated, as seen in Figure 1.

That insert 6 in the foam of the cushion 1 can be seen in perspective in Figure 2, an end area 8 free of the foam of the cushion and connection stubs 9 which are also free of said foam being distinguished therein.

To close the seat 11 of the present example of the system of the invention fast connections by snap coupling, clipping or similar means using the stubs 9 and the end area 8 of the insert 6 are carried out. By means of that area 8 and a fastening element or section 5 the edges of the corresponding cover 2 and the edges of that end area 8 are thus encircled, closing the cushion-cover assembly 3, while by means of the stubs 9 of the insert 6 the connection with the corresponding metal chair 4 is carried out, as can be seen in Figure 1.

As seen in the present example, the mentioned insert 6 has a rectangular shape provided with hollow spaces 10 to save material and having in its main body 7 a dihedral angle bend parallel to a larger side determining an L-section in the plate the smaller branch of which corresponds to the mentioned end area 8. Furthermore, according to that shown in Figure 2, rods 15 which start out perpendicularly towards the same direction as the mentioned smaller branch of the L-shape near the smaller sides of the mentioned plate, said rods determining the connection stubs 9, can be seen.

According to the present example, the insert 6 is made with a rigid material such as plastic or polymer, being able to be made by plastic injection by means of a single mould. To connect this insert 6 to the foam of the cushion 1, said insert 6 is included at the time of foaming inside a shaping mould for the foam cushion 1, this insert 6 becoming an integral part of the cushion 1.

## Claims

1. A fastening system for seats, especially applicable to automobile seats wherein the seat (12) has a foam cushion (1) which is partially surrounded with a cover (14) made from a textile, leather or another material and which is placed on a usually metal base or chair (15), the assembly of the seat (12) being closed at least in one of its areas with a locking section or clip (16) encircling end edges of the chair (15) and of the cover (14); **characterised in that** the corresponding foam cushion (1) incorporates an insert (6) which has at least one end area (8) free of the foam of the cushion and connection stubs (9) which are also free of said foam, such that the mentioned closing of the corresponding seat (11) is carried out by means of a fastening element or section (5) encircling the edges of the corresponding cover (2) and the edges of the mentioned end area (8) free of foam for closing the cushion-cover assembly (3), said closing of the corresponding seat (11) further being carried out by means of connecting the corresponding chair (4) with the mentioned stubs (9).

2. The fastening system for seats according to claim 1, **characterised in that** said insert (6) has a rectangular plate shape provided with hollow spaces (10) and having in its main body (7) a dihedral angle bend parallel to a larger side determining an L-section in the plate the smaller branch of which corresponds to the mentioned end area (8), while respective protruding rods orientated in the same direction as that smaller branch and determining the mentioned connection stubs (9) start out perpendicularly near the smaller sides of said plate.

3. The fastening system for seats according to claim 1 or 2, **characterised in that** said insert (6) is made of a rigid material such as plastic, polymer or another material and is included at the time of foaming inside a shaping mould for the foam cushion (1), such that said insert (6) becomes an integral part of the mentioned cushion (1).
